# EUROPÄISCHE PATENTSCHRIFT

(11) **EP 2 065 291 B1**
(45) Veröffentlichungstag und Bekanntmachung des Hinweises auf die Patenterteilung: **09.06.2010**
(21) Anmeldenummer: 08104864.7
(22) Anmeldetag: 24.07.2008
(51) Int. Cl.: B62D 5/00, B62D 6/00

(54) **Verfahren zum Betrieb einer Überlagerungslenkung für ein Kraftfahrzeug**
Method for operating superimposed steering for a motor vehicle
Procédé de fonctionnement d'une direction à superposition pour un véhicule automobile

(30) Priorität: 28.11.2007 DE 102007000995
(43) Veröffentlichungstag der Anmeldung: 03.06.2009
(73) Patentinhaber: ZF-Lenksysteme GmbH, 73527 Schwäbisch Gmünd (DE)
(72) Erfinder: Greul, Roland, 73547 Lorch-Waldhausen (DE); Kreis, Christopher, 73728 Esslingen (DE); Strecker, Jörg, 73655 Plüderhausen (DE)

(56) Entgegenhaltungen:
- EP-A- 1 514 765
- DE-A1- 10 009 921
- DE-A1- 10 109 580
- DE-A1- 10 248 343
- DE-A1-102005 012 584
- DE-A1-102005 018 519

## Beschreibung

Die Erfindung betrifft ein Verfahren für den Betrieb einer Überlagerungslenkung in einem Kraftfahrzeug nach dem Oberbegriff des Hauptanspruchs.

In der DE 197 51 125 wird ein Verfahren zum Betrieb eines Lenksystems für ein Kraftfahrzeug offenbart, das mittels eines Stellantriebes und eines Überlagerungsstellers die durch den Fahrer des Fahrzeugs initiierte Lenkbewegung und die durch den Stellantrieb initiierte Bewegung überlagert, und wobei ein Steuersignal für den Stellantrieb erzeugt wird, welches durch Überlagerung von wenigstens zwei parallel und unabhängigen Lenkanteilen gebildet wird.

Die DE 10 2005 012 584 A1 offenbart ein Verfahren zum Betrieb einer Überlagerungslenkung gemäß dem Obergegriff des Anspruchs 1.

Aufgabe der Erfindung ist es, ein Verfahren zum Betrieb einer Überlagerungslenkung zur Erhöhung der Fahrsicherheit bei Kurvenfahrten vorzuschlagen. Diese Aufgabe wird mit den kennzeichnenden Merkmalen des Hauptanspruchs gelöst.

Zur Lösung dieser Aufgabe ist es vorgesehen, dass bei einer Erkennung eines Untersteuerzustandes des Fahrzeugs die Sollvorgabe des Zusatz-Lenkwinkels mittels einer Steuer- und Regelungseinheit dahingehend verändert wird, dass die Radseitenkraft F_{y} in einem Bereich eines als maximal erreichbar angenommenen , von Umgebungseinflüssen (Reibwert, Reifenparameter) abhängigen Radseitenkraft-Maximalwerts für die Zeitdauer des erkannten Untersteuerzustandes gehalten wird.

Vorteilhafte Ausführungsformen des erfindungsgemäßen Verfahrens sind in den abhängigen Ansprüchen angegeben.
Figur 1 zeigt schematisch die in einem Lenkstrang befindliche Überlagerungslenkung eines Kraftfahrzeugs, auf die sich das erfindungsgemäße Verfahren anwenden lässt.
Die Figur 2a und 2b zeigen den Zusammenhang zwischen Schräglaufwinkel und Seitenführungskraft beziehungsweise Reifenrückstellmoment
Figur 3 zeigt eine Struktur zur Bestimmung des Grads des momentanen Untersteuerzustands.
Figur 4 zeigt eine Ausführungsform gemäß der Erfindung unter Verwendung eines Differenzwerts zwischen der Soll- und Ist-Gierrate
Figur 5 zeigt eine Ausführungsform gemäß der Erfindung unter Verwendung der momentanen Querbeschleunigung und einer geschätzten Zahnstangenkraft.
Figur 6 zeigt eine Umsetzungsvariante des erfindungsgemäßen Verfahrens unter Verwendung von Raddrehzahlen und eines virtuellen Radlenkwinkels.

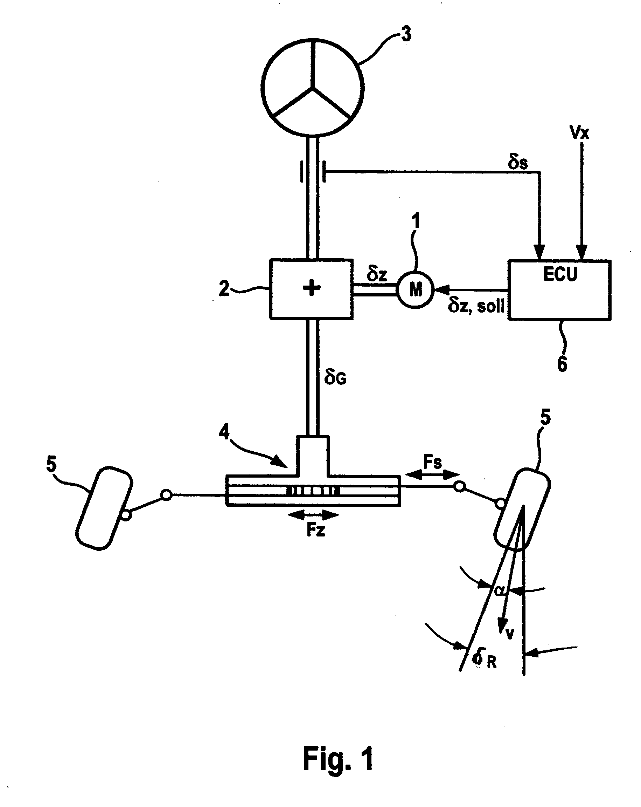

Figur 1 zeigt schematisch eine Hilfskraftlenkung eingangs erwähnter Art, beinhaltend einen Stellantrieb 1, der einen Zusatz-Lenkwinkel δ_{Z} gemäß einer Sollvorgabe δ_{Z,Soll} in den Lenkstrang des Lenksystems mittels des Überlagerungsgetriebes 2 einleitet, wobei ein ausgangsseitiger Gesamtlenkwinkel δ_{G} gebildet wird und eingangsseitig dem elektrisch oder hydraulisch unterstützten Lenkgetriebe 4 zugeführt wird. Mittels einer Zahnstange und Spurstangen wird der Gesamtlenkwinkel den gelenkten Rädern 5 zugeführt und ein Radlenkwinkel δ_{R} erzeugt. Eine Steuer- und Regeleinheit 6 erhält als Eingangsgrößen den durch den Fahrer eingeprägten Lenkwinkel δ_{S} und die aktuelle Fahrgeschwindigkeit vₓ des Fahrzeugs. Eine in der Steuer- und Regeleinheit 6 implementierte VSR- Funktionalität (variable Lenkübersetzung) berechnet aus den Eingangsgrößen eine Sollvorgabe für den Stellantrieb 1.

Vollzieht ein Kraftfahrzeug eine Kurvenfahrt so entsteht an dem zu einem Rad abstrahierten Rädern der gelenkten Vorderachse ein Schräglaufwinkel αᵥ und entsprechend ein Schräglaufwinkel αₕ an der Hinterachse.

Ein Untersteuerverhalten bei einer Kurvenfahrt ist definiert als αᵥ - αₕ > 0, ein übersteuerndes Verhalten wird als αᵥ - αₕ < 0 definiert. Im Allgemeinen weist ein Kraftfahrzeug bei einer Kurvenfahrt ein untersteuerndes Verhalten auf. In der Figur 1 zeigt den Schräglaufwinkel α der vorderen Achse abstrahiert an einem gelenkten Rad der Achse. Der Schräglaufwinkel α bildet sich zwischen dem Geschwindigkeitsvektor **v** des Rads und des Radlenkwinkels δ_{R} bei untersteuerndem Verhalten des Fahrzeugs aus.

Bei Kraftfahrzeugen, die mit einer Überlagerungslenkung wie in der DE 197 51 125 beschrieben, ausgestattet sind, ist es möglich, autonome fahrdynamische Lenkeingriffe zur Herstellung der Wiederbeherrschbarkeit des Fahrzeugs vorzunehmen. Siehe hierzu auch die einschlägigen Veröffentlichungen von Anton van Zanten zur Fahrdynamikregelung.

Vorliegende Erfindung erweitert dieses Konzept dahingehend, dass bei einem zu stark untersteuernden Fahrzeug das untersteuernde Verhalten unter Verwendung einer Überlagerungslenkung zu reduzieren.

Erfindungsgemäß ist es vorgesehen, dass die Sollvorgabe für den Zusatzlenkwinkel in diesem Zustand derart modifiziert wird, dass sich der Gesamtlenkwinkel δ_{G} und dementsprechend der Radlenkwinkel δ_{R} gemäß der Beziehung δ_{S} + δ_{Z} reduziert und in einem Bereich der maximaler Seitenführungskraft F_{y,max} des Rades rückgeführt und gehalten wird.

Somit wird mittels der Überlagerungslenkung ein optimaler Radlenkwinkel δ_{R} eingestellt, bei dem eine maximal erreichbare Seitenkraft auf den Reifen wirkt und somit eine maximal mögliche Querbeschleunigung des Fahrzeugs erzielt wird.

Es ist daher von Vorteil, den maximalen Wert der Seitenführungskraft anhand der geschätzten Zahnstangenkraft zu erkennen.

Der Radlenkwinkel δ_{R} entsteht hierbei aus additiver Überlagerung eines vom Fahrer eingeleiteten Fahrerlenkwinkels δ_{S} und eines vom Stellantrieb eingeleiteten Zusatzlenkwinkels δ_{Z} wobei sich ein Gesamtlenkwinkel δ_{G} gemäß der Beziehung δ_{S} + δ_{Z} ergibt. Der Gesamtlenkwinkel δ_{G} wird dabei mittels des Lenkgetriebes und den Spurstangen an die gelenkten Räder übertragen und entspricht somit im Wesentlichen dem Radlenkwinkels δ_{R} eines zu einem Rad abstrahierten Rädern der gelenkten vorderen Achse.

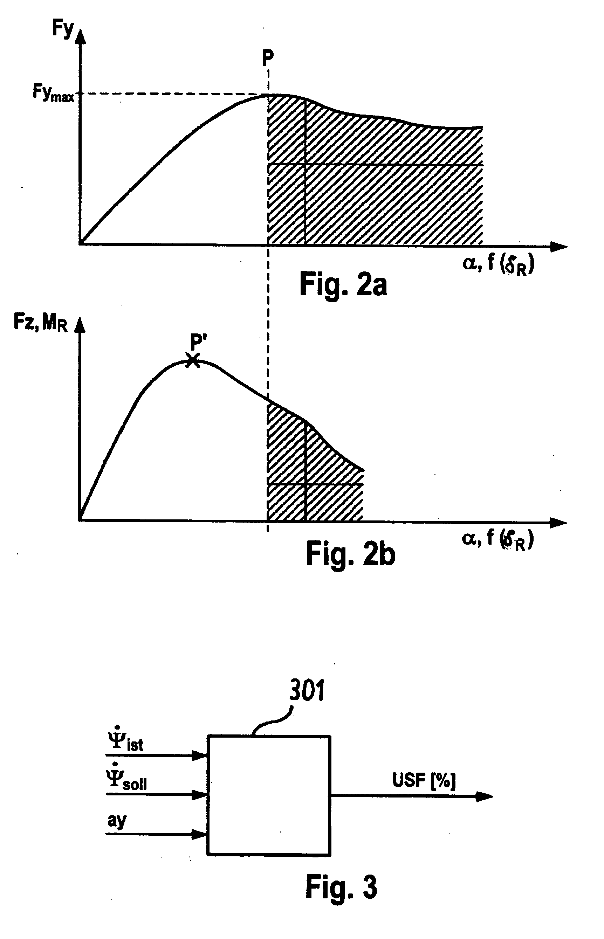

Betrachtet man, wie in Figur 2a dargestellt, den Zusammenhang zwischen RadSeitenkraft F_{y} und Radlenkwinkel δ_{R} beziehungsweise eines sich daraus ergebenden Schräglaufwinkels α, so wird deutlich, dass ab einem gewissen Wert es nicht mehr möglich ist eine zusätzliche Seitenführungskraft aufzubauen.

Es stellt sich bei weiter ansteigenden Radlenkwinkel δ_{R} sogar eine Reduzierung der Seitenführungskraft ein.

In der Figur 2a ist dieser Übergang durch den Punkt P gekennzeichnet. Rechts dieses Punktes befindet sich das Fahrzeug im untersteuernden Zustand (schraffierter Bereich). Die Erfindung sieht vor, den Zustand, bei dem eine weitere Zunahme des Radlenkwinkels δ_{R}, d.h. eine weitere Erhöhung des Radeinschlags, zu keiner weiteren Erhöhung der Radseitenkraft führt, zu erkennen.

In der Figur 2b ist das dazugehörige Rückstellmoment M_{R} des Reifens beziehungsweise die entsprechend der Seitenkraft auf die Zahnstange wirkende Zahnstangenkraft F_{Z} aufgezeichnet. Bezogen auf den Schräglaufwinkel α bildet sich das Maximum P' für die Zahnstangenkraft F_{Z} respektive das Reifen-Rückstellmoment M_{R} aufgrund von Reifeneigenschaften deutlicher und früher aus. Der Punkt P maximaler Seitenkraftführung F_{y,max} liegt demnach in einem Bereich wieder abfallender Zahnstangenkraft, nachdem das durch den Punkt P' gekennzeichnete Maximum überschritten worden ist. Diese Erkenntnis ist äußerst hilfreich für die sichere Erkennung eines untersteuernden Zustandes.

Da sich mit abnehmendem Reibwert die maximale Seitenführungskraft verringert und dementsprechend auch die Radlastdifferenz, erhält man aufgrund der Reifeneigenschaften auch geringere Spurstangenkräfte. Daraus ergeben sich Schwellwerte in Abhängigkeit der Querbeschleunigung. Die momentane Spurstangenkraft wird vorzugsweise mittels eines Schätzalgorithmus, wie in der deutschen Patentanmeldung mit dem Aktenzeichen 10 2006 036 751 beschrieben, ermittelt.

In einer weiteren erfindungsgemäßen Abwandlung des Verfahrens ist es vorgesehen, dass der untersteuernde Zustand mittels einer Bewertung eines zuvor bestimmten Untersteuer-Faktors, "USF", wie in Figur 3 schematisch dargestellt, identifiziert wird.

Einer arithmetisch- logischen Funktionseinheit 301 wird die Soll-Gierrate ψ̇ *soll*, die Ist-Gierrate ψ̇ *ist* und die Querbeschleunigung a_{y} zugeführt.

Diese Größen werden intern verrechnet und gegeneinander plausibilisiert um daraus einen Wert zu bestimmen, der den Grad der Untersteuerung, USF%, festlegt. Eine nicht weiters dargestellte nachfolgende Bewertungs- und Entscheidungseinheit trifft daraus unter Verwendung weiterer Größen eine binäre Entscheidung über das Vorliegen des Untersteuer-Zustandes.

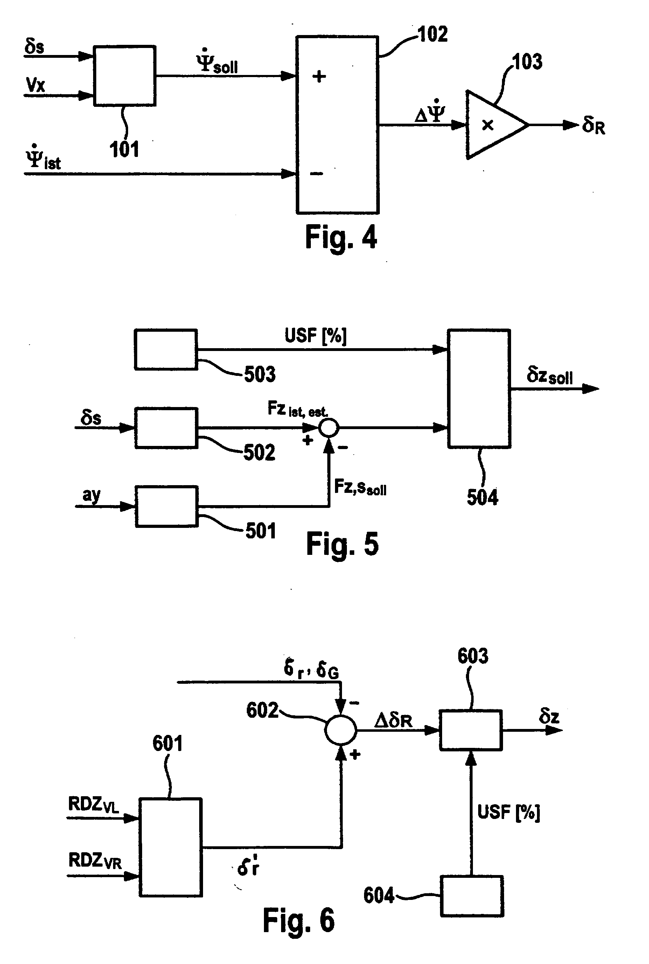

In der Figur 4 ist ein alternatives Verfahren als weiteres Ausführungsbeispiel dargestellt. Einem Fahrzeug-Referenzmodell 101 wird der fahrerseitig eingeprägte Lenkwinkel δ_{S} und die Fahrzeuggeschwindigkeit vₓ zugeleitet. Daraus wird eine Soll-Gierrate ψ̇ *soll* ermittelt und mit der gemessenen Ist-Gierrate ψ̇ *ist* verglichen.

Ein Gierraten-Abweichungswert Δψ̇ wird von einem Differenz-Glied 102 arithmetisch bestimmt und nach dessen Maßgabe ein mittels eines Verstärkungsglieds 102 der durch entsprechendes Setzen der Sollvorgabe für den durch den Zusatz-Lenkwinkel δ_{Z} einzustellenden Radlenkwinkel δ_{R} festgelegt.

Der Funktionsblock 301 ist bevorzugt als computerimplementiertes Verfahren auf der Steuer- und Regeleinheit 6 hinterlegt.

Figur 5 zeigt ein weiteres Verfahren gemäß der Erfindung. Die momentane Querbeschleunigung a_{y} wird dem Funktionsblock 501 zugeführt, der aus fahrzeugspezifischen Größen, beispielsweise dem Schwerpunkt des Fahrzeugs und den geometrischen Achs- und Lenkungsverhältnissen eine Umrechnung der Seitenführungskraft F_{y} in eine Spurstangenkraft F_{S} vornimmt.

Der Funktionsblock 502, der im Wesentlichen einen Schätzalgorithmus zur Bestimmung der Spurstangenkraft F_{S} beziehungsweise der Zahnstangenkraft F_{Z} beinhaltet, ermittelt anhand intern bekannter Größen der Servolenkung, insbesondere aus Winkel- und Momenten- Informationen, eine als real angenommene, auf die Zahnstange einwirkende Zahnstangenkraft F_{Z} bzw. Spurstangenkraft F_{S}.

Die Ausgangsgrößen beider Funktionsblöcke 501, 502 werden einer Vergleichsstelle zugeführt wobei die aus dem Funktionsblock 502 ermittelte geschätzte Spurstangenkraft als Istwert und die aus dem Funktionsblock 501 stammende Spurstangenkraft als Sollvorgabe dient.

Eine nachfolgende Regelungsstufe 504 ermittelt unter zwingender Berücksichtigung des im Funktionsblock 503 ermittelten momentanen Fahrzustandes, d.h. bei Vorliegen eines als untersteuernd bewerteten Zustandes, eine Sollvorgabe für den einzustellenden Zusatz-Lenkwinkel δ_{Z,soll}. Der Funktionsblock 503 dient zur Ermittlung des Grades des Untersteuerns und arbeitet gemäß dem zu Figur 3 beschriebenen Verfahren.

Eine weitere Ausführungsform gemäß der Erfindung ist in der Figur 6 dargestellt. Hierbei werden die Raddrehzahlen der gelenkten Räder der vorderen Achse, RDZᵥₗ, RDZᵥᵣ, erfasst und einem Funktionsblock 601 zur Berechnung eines virtuellen Radlenkwinkels δ_{R}' zugeführt. Zum einen ist der virtuelle Radlenkwinkel δ_{R}' ist in weiten Bereichen nahezu identisch mit dem real anliegenden Radlenkwinkel δ_{R}, er zeigt darüber hinaus auch den qualitativen Verlauf der Querbeschleunigung a_{y}.

Nach Erreichen der maximalen Querbeschleunigung ist er ebenfalls konstant. Die mittels der Vergleichstelle 602 ermittelte Radlenkwinkeldifferenz Δ δ_{R} wird einer nachfolgenden Regelungsstufe 603 zugeführt, welche einen Sollwert für den Zusatzlenkwinkel δ_{Z} bestimmt, um eine vorhande Radlenkwinkeldifferenz zu minimieren. Die Funktionseinheit 604 dient zur Ermittlung des Grades des Untersteuerns und arbeitet gemäß dem zu Figur 3 beschriebenen Verfahren. Die Reglerstufe 603 wird nach deren Maßgabe des Untersteuerfaktors USF% in einen aktiven oder inaktiven Modus geschaltet. Ein Korrekturwert für den Zusatzlenkwinkel wir dementsprechend berechnet und aufgeschaltet oder zu null gesetzt. Die Information über den untersteuernden Zustand USF% muss hierbei nicht zwingend der Regelungsstufe 603 zugeführt sein, sie dient hauptsächlich zur Plausibilisierung.

## Patentansprüche

1. Verfahren zur fahrdynamischen Beeinflussung eines Kraftfahrzeugs mit einer Hilfskraftlenkung, aufweisend eine Servounterstützungseinheit (4), ein Überlagerungsgetriebe (2) und einen Stellantrieb (1) zur Korrektur eines Fahrerlenkwinkels (δ_{S}) durch Einleitung eines Zusatzlenkwinkels (δ_{Z}), wobei ein Gesamtlenkwinkel (δ_{G}) zur Radlenkwinkelverstellung von gelenkten Rädern (5) mittels des Überlagerungsgetriebes (2) gebildet wird, und wobei eine dem Stellantrieb (1) zugeordnete Steuer- und Regelungseinheit (10) eine Sollvorgabe für den Zusatzlenkwinkel (δ_{Z}) ermittelt,
wobei bei Erkennung eines Untersteuerzustandes die Sollvorgabe des Zusatzlenkwinkels (δ_{Z}) dahingehend verändert wird, dass die Radseitenkraft (F_{y}) in einem Bereich eines maximal erreichbaren, von Umgebungseinflüssen abhängigen Radseitenkraft-Maximalwerts (F_{y,max}) für die Zeitdauer des Untersteuerzustandes gehalten wird, **dadurch gekennzeichnet, dass** die Sollvorgabe für den Zusatzlenkwinkel (δ_{Z}) nach Maßgabe eines Differenzwerts aus einem mittels eines Schätzers (502) ermittelten Werts einer Spurstangenkraft (F_{S}) beziehungsweise einer Zahnstangenkraft (F_{Z}) und einer aus der momentanen Querbeschleunigung (a_{y}) mittels einer Berechnungseinheit (501) abgeleiteten Sollvorgabe (F_{Z,S Soll}) für die Spurstangenkraft (F_{S}) beziehungsweise der Zahnstangenkraft (F_{Z}) bestimmt wird.

2. Verfahren zur fahrdynamischen Beeinflussung eines Kraftfahrzeugs mit einer Hilfskraftlenkung nach Anspruch 1, **dadurch gekennzeichnet, dass** ein virtueller Radlenkwinkel (δ_{R}') aus den Raddrehzahl-Informationen der gelenkten vorderen Räder (RDZvl , RDZvr) einer Achse ermittelt wird und kontinuierlich mit einer Größe geeignet zur Beschreibung eines Ist-Radlenkwinkels (δ_{R}, δ_{G}) verglichen wird und nach Maßgabe der Abweichung zwischen beiden Größen eine Sollvorgabe für den Zusatzlenkwinkel (δ_{Z}) ermittelt wird.

3. Verfahren zur fahrdynamischen Beeinflussung eines Kraftfahrzeugs mit einer Hilfskraftlenkung nach Anspruch 1, **dadurch gekennzeichnet, dass** die Sollvorgabe für den Zusatz-Lenkwinkel (δ_{Z}) nach Maßgabe eines Differenzwertes zwischen einer Ist-Gierrate (ψ̇ *ist)* und einer mittels eines Fahrzeugreferenzmodells (101) bestimmten Soll-Gierrate (ψ̇ *soll*) ermittelt wird, wobei dem Fahrzeugreferenz-Modell wenigstens die Fahrzeug-Längsgeschwindigkeit (Vₓ) und den Fahrerlenkwinkel (δ_{S}) als Eingangsgrößen zugeführt sind.

4. Verfahren zur fahrdynamischen Beeinflussung eines Kraftfahrzeugs mit einer Hilfskraftlenkung nach einem der vorstehenden Ansprüche 1 bis 4, **dadurch gekennzeichnet, dass** zur Erkennung des Untersteuerverhaltens eine Fahrzustands-Erkennungs-Einheit (604), (503), (301) verwendet wird, die als Eingangsgrößen eine Ist-Gierrate (ψ̇ *ist*)*,* eine Soll-Gierrate (ψ̇ *soll)* und eine Querbeschleunigung (a_{y}) erhält und die aus den Eingangsgrößen mittels hinterlegten algebraischen Algorithmen und/oder einer Zustandsmaschine und/oder einer Fuzzylogik eine Größe geeignet zur Beschreibung des momentanen Untersteuerungsverhaltens (USF%) bestimmt und nach dessen Maßgabe ein Untersteuerzustand abgeleitet wird, nach dessen Maßgabe ein Regelungsverfahren zur Ermittlung der Sollwertvorgabe des Zusatzlenkwinkels (δ_{Z,Soll}) beeinflusst wird.

5. Computerprogramm, **dadurch gekennzeichnet, dass** es zur Durchführung eines Verfahrens nach einem der vorstehenden Ansprüche geeignet ist.

6. Computerprogramm nach Anspruch 5, **dadurch gekennzeichnet, dass** es auf einem Speichermedium abgespeichert ist.

7. Steuergerät zum Steuern einer Hilfskraftlenkung mit einer Servounterstützungseinheit (4), einem Überlagerungsgetriebe (2) und einem Stellantrieb (1) zur Korrektur eines Fahrer-Lenkwinkels (δ_{S}) durch Einleitung eines Zusatz-Lenkwinkels (δ_{Z}), wobei ein Gesamt-Lenkwinkel (δ_{G}) zur Radlenkwinkelverstellung von gelenkten Rädern (5) mittels des Überlagerungsgetriebes (2) gebildet wird, und wobei eine dem Stellantrieb (1) zugeordnete Steuer- und Regelungseinheit (10) eine Sollvorgabe für den Zusatzlenkwinkel (δ_{Z}) ermittelt, **dadurch gekennzeichnet, dass** das Steuergerät nach einem Verfahren nach einem der Ansprüche 1 bis 4 arbeitet.

## Claims

1. Method for controlling the driving dynamics of a motor vehicle with a power steering system, including a power steering assistance unit (4), a superimposition transmission (2) and a final control device (1) for correcting a driver steering angle (δ_{S}) by applying an additional steering angle (δ_{Z}), wherein an overall steering angle (δ_{G}) is formed in order to adjust the wheel steering angle of steered wheels (5) by means of the superimposition transmission (2), and wherein an open-loop and closed-loop control unit (10), which is assigned to the final control device (1) determines a set point value for the additional steering angle (δ_{Z}), wherein, when an under steering state is detected, the set point value of the additional steering angle (δ_{Z}) is changed such that the lateral wheel force (F_{y}) is kept in a range of a maximum achievable maximum value (F_{y,max}) of the lateral wheel force, which is dependent on environmental influences, for the duration of the under steering state, **characterized in that** the set point value for the additional steering angle (δ_{Z}) is determined in accordance with a differential value from a value of a tie-rod force (F_{S}) or of a steering rack force (F_{Z}) determined by means of an estimator (502) and of a set point value (F_{Z,S setp}) for the tie-rod force (F_{S}) or of the steering rack force (F_{Z}) derived from the instantaneous lateral acceleration (a_{y}) by means of a calculation unit (501).

2. Method for controlling the driving dynamics of a motor vehicle with a power steering system according to Claim 1, **characterized in that** a virtual wheel steering angle (δ_{R'}) is determined from the wheel speed information of the steered front wheels (RDZfl, RDZfr) of an axle, is continuously compared with a variable which is suitable for describing an actual wheel steering angle (δ_{R}, δ_{G}) and a set point value for the additional steering angle (δ_{Z}) is determined in accordance with the deviation between the two variables.

3. Method for controlling the driving dynamics of a motor vehicle with a power steering system according to Claim 1, **characterized in that** the set point value for the additional steering angle (δ_{Z}) is determined in accordance with a differential value between an actual yaw rate (ψ̇ *act*) and a set point yaw rate (ψ̇ *setp*) determined by means of a vehicle reference model (101), wherein at least the longitudinal speed of the vehicle (vₓ) and the driver steering angle (δ_{S}) are fed as input variables to the vehicle reference model.

4. Method for controlling the driving dynamics of a motor vehicle with a power steering system according to one of the preceding Claims 1 to 4, **characterized in that**, in order to detect the under steering behaviour, a driving state detection unit (604), (503), (301) is used which receives, as input variables an actual yaw rate (ψ̇ *act*) *,* a set point yaw rate (ψ̇ *setp*) and a lateral acceleration (a_{y}) and determines a variable suitable for describing the instantaneous under steering behaviour (USF%) from the input variables by means of stored algebraic algorithms and/or a state machine and/or fuzzy logic, and in accordance with said under steering behaviour (USF%) an under steering state is derived, in accordance with which a control behaviour for determining the set point value of the additional steering angle (δ_{Z} *setp*) is influenced.

5. Computer program **characterized in that** it is suitable for carrying out a method according to one of the preceding claims.

6. Computer program according to Claim 5, **characterized in that** it is stored on a storage medium.

7. Control unit for controlling a power steering system with a power steering assistance unit (4), a superimposition transmission (2) and a final control device (1) for correcting a driver steering angle (δ_{S}) by applying an additional steering angle (δ_{Z}), wherein an overall steering angle (δ_{G}) is formed in order to adjust the wheel steering angle of steered wheels (5) by means of the superimposition transmission (2), and wherein an open-loop and closed-loop control unit (10) which is assigned to the final control device (1) determines a set point value for the additional steering angle (δ_{Z}), **characterized in that** the control unit operates according to a method according to one of Claims 1 to 4.

## Revendications

1. Procédé pour commander un véhicule automobile par le biais d'une dynamique de conduite avec une direction assistée, présentant une unité d'assistance par asservissement (4), une transmission à superposition (2) et un entraînement de réglage (1) pour corriger un angle de direction du conducteur (δ_{S}) en introduisant un angle de direction supplémentaire (δ_{Z}), un angle de direction total (δ_{G}) pour le réglage de l'angle de direction des roues pour les roues dirigées (5) étant formé au moyen de la transmission à superposition (2), et une unité de commande et de régulation (10) associée à l'entraînement de réglage (1) déterminant une valeur de consigne préalable pour l'angle de direction supplémentaire (δ_{Z}),
la valeur de consigne préalable pour l'angle de direction supplémentaire (δ_{Z}) étant modifiée à la détection d'un état de sous-virage, de façon à ce que la force latérale des roues (F_{y}) soit maintenue dans une plage d'une valeur maximale de force latérale des roues (F_{y}, ₘₐₓ) dépendant des influences de l'environnement, pouvant être atteinte au maximum, pendant la durée de l'état de sous-virage, **caractérisé en ce que** la valeur de consigne préalable pour l'angle de direction supplémentaire (δ_{Z}) est déterminée en fonction d'une valeur différentielle entre une valeur d'une force de barre d'accouplement (F_{S}) ou d'une force de crémaillère (F_{Z}) déterminée au moyen d'un dispositif d'évaluation (502), et une valeur de consigne préalable (F_{Z,S Soll}) pour la force de barre d'accouplement (F_{S}) ou la force de crémaillère (F_{Z}) dérivée de l'accélération transversale instantanée (a_{y}) au moyen d'une unité de calcul (501).

2. Procédé pour commander un véhicule automobile par le biais d'une dynamique de conduite avec une direction assistée selon la revendication 1, **caractérisé en ce qu'**un angle de direction des roues virtuel (δ_{R}') est déterminé à partir des informations de vitesse de rotation des roues des roues avant dirigées (RDZvl, RDZvr) d'un essieu, et est comparé en continu avec une valeur appropriée pour décrire un angle de direction des roues instantané (δ_{R}, δ_{G}), et en fonction de l'écart entre ces deux valeurs, une valeur de consigne préalable pour l'angle de direction supplémentaire (δ_{Z}) est déterminée.

3. Procédé pour commander un véhicule automobile par le biais d'une dynamique de conduite avec une direction assistée selon la revendication 1, **caractérisé en ce** la valeur de consigne préalable pour l'angle de direction supplémentaire (δ_{Z}) est déterminée en fonction d'une valeur différentielle entre une vitesse de lacet instantanée (ψ *ist*) et une vitesse de lacet de consigne (ψ *soll*) déterminée au moyen d'un modèle de référence du véhicule (101), le modèle de référence du véhicule recevant en tant que valeurs d'entrée au moins la vitesse longitudinale du véhicule (v_{X}) et l'angle de direction du conducteur (δ_{S}).

4. Procédé pour commander un véhicule automobile par le biais d'une dynamique de conduite avec une direction assistée selon l'une quelconque des revendications précédentes 1 à 3, **caractérisé en ce que** pour reconnaître le comportement de sous-virage, on utilise une unité de reconnaissance de l'état de conduite (604), (503), (301), qui reçoit en tant que valeurs d'entrée une vitesse de lacet instantanée (ψ *ist*), une vitesse de lacet de consigne (ψ *soll*) et une accélération transversale (a_{y}), et qui détermine, à partir des valeurs d'entrée, au moyen d'algorithmes algébriques consignés et/ou d'une machine d'état et/ou d'une logique floue, une valeur appropriée pour décrire le comportement de sous-virage instantané (USF%) et en fonction de laquelle un état de sous-virage est déduit, en fonction duquel un comportement de régulation est commandé pour déterminer la valeur de consigne préalable de l'angle de direction supplémentaire (δ_{Z}, _{Soll}).

5. Programme informatique, **caractérisé en ce qu'**il est approprié pour mettre en oeuvre un procédé selon l'une quelconque des revendications précédentes.

6. Programme informatique selon la revendication 5, **caractérisé en ce qu'**il est mémorisé sur un support de mémoire.

7. Appareil de commande pour commander une direction assistée avec une unité d'assistance par asservissement (4), une transmission à superposition (2) et un entraînement de réglage (1) pour corriger un angle de direction du conducteur (δ_{S}) en introduisant un angle de direction supplémentaire (δ_{Z}), un angle de direction total (δ_{G}) pour le réglage de l'angle de direction des roues pour les roues dirigées (5) étant formé au moyen de la transmission à superposition (2), et une unité de commande et de régulation (10) associée à l'entraînement de réglage (1) déterminant une valeur de consigne préalable pour l'angle de direction supplémentaire (δ_{Z}), **caractérisé en ce que** l'appareil de commande fonctionne selon un procédé selon l'une quelconque des revendications 1 à 4.
